# EUROPEAN PATENT APPLICATION

(11) **EP 1 185 067 A1**
(43) Date of publication of application: **06.03.2002**
(21) Application number: 01302255.3
(22) Date of filing: 12.03.2001
(51) Int. Cl.: H04M 3/533, H04M 3/537, H04M 3/54

(54) **Toll-saver feature implemented by a switching system**

(30) Priority: 28.08.2000 US 649237
(71) Applicant: LUCENT TECHNOLOGIES INC., Murray Hill, New Jersey 07974-0636 (US)
(72) Inventor: Michaelis, Paul Roller, Louisville, Colorado 80027 (US)
(74) Representative: Watts, Christopher Malcolm Kelway, Dr.

(57) **Abstract**

The "send-all-calls" (SAC) feature (126) of a telephony switch (102) is used to implement a toll-saver-like feature for users of a messaging system (100). A user (114-116) can activate the toll-saver-like feature either on the switching system or on the messaging system. If it is activated on the messaging system, whenever the messaging system stores (400) a new message for the user, it sends (406) a SAC feature activation feature access code (FAC) for the user to the switch, and whenever the messaging system ceases to store (500) any new messages for the user, it sends (508) a SAC feature deactivation FAC for the user to the switch. If the toll-saver-like feature is activated on the switch, the messaging system sends (900) conventional message-waiting indication (MWI) activation and deactivation signals instead of the SAC feature FACs. The switch responds to the SAC feature activation FAC or the MWI activation signal by activating (908) the SAC feature, so that upon receiving (700) a call for the user, the switch uses the SAC feature to immediately send (704) the call to coverage at the messaging system. The switch responds to the SAC feature deactivation FAC or the MWI deactivation signal by deactivating (910) the SAC feature, so that upon receiving a call for the user, the switch rings (706) the user's phone and sends (708) the unanswered call to coverage at the messaging system only after a time interval that gives the caller a chance to hang up the call before it is answered by the messaging system. To find out whether he or she has any new messages, the user does not call the central number for the messaging system but rather calls his or her own phone number from a remote phone. If the user is not immediately connected to the messaging system, the user has no new messages, and can hang up the call before it is answered. If the user is immediately connected to the messaging system, the user has new messages, and can now conventionally remotely log into his or her message mailbox to retrieve them.

## Description

### Technical Field

This invention relates generally to telecommunications features and specifically to messaging features.

### Background of the Invention

Users of shared messaging systems, such as voice message systems, must call into the system and have the system answer the call before they can find out whether the system has any new messages for them. Cell phone users and users who are calling long distance must pay a toll charge every time that they check for new messages. Local pay-phone callers must only pay a local charge, but even that can add up to a substantial cost if the users check for new messages frequently.

Many desktop answering machines incorporate a feature commonly referred to as a "toll saver." When a new message is present on the machine, it answers incoming calls after a small number of rings (typically two). When there are no new messages, it answers incoming calls after a larger number of rings (typically five). Thus, the user of the answering machine may call into it and, after hearing the third or fourth ring, hang up: they have discovered, without paying a penny, that they have no new messages. By contrast, if the machine answers the call after two rings, the user may enter a code and retrieve the new messages.

The toll saver feature works well on a desktop answering machine because that machine is normally used by only one user, and hence the assumption may be made that any new messages are for that one user. This assumption is not true, however, for a messaging system whose use is shared by a plurality of users. Hence, in a messaging system, the standard toll saver feature would only indicate to a user whether or not there are new messages for anyone, but not whether or not there are new messages for this particular user. Clearly, that is not very helpful.

### Summary of the Invention

This invention is directed to solving these and other problems and disadvantages of the prior art. Illustratively according to the invention, the "send-all-calls" feature of a telephony switching system is used to implement a toll-saver-like feature for users of a messaging system. Generally according to the invention, in a communications system that comprises a communications switch for directing communications to individual ones of a plurality of destinations and a messaging system coupled to the switch for storing messages for individual ones of the destinations, the messaging system responds to having a new message for a first one of the destinations by sending a first signal―illustratively a "message waiting indication" activation signal―to the switch and responds to not having a new message for the first destination by sending a second signal―illustratively a "message waiting indication" deactivation signal―to the switch. The switch responds to the first signal and to a communication incoming to the first destination by redirecting the incoming communication to the messaging system after a first time interval―preferably immediately―and responds to the incoming communication and the second signal by redirecting the incoming communication to the messaging system only after a second time interval longer enough than the first interval to enable an originator of the incoming communication to terminate the communication before the communication is answered by the messaging system. Illustratively, the first signal enables while the second signal disables a send-all-calls feature for the first destination on the switch. Preferably, the originator of the communication is provided a "waiting-for-answer" signal, such as ring-back, during the second interval.

Correspondingly, a messaging system adapted for use with a communications switching system that is adapted to redirect communications incoming to individual ones of a plurality of destinations to the messaging system after either one of a first time interval and a second longer time interval― illustratively, a communications switching system that implements the send-all-calls feature―comprises a storage apparatus for storing messages for individual ones of the destinations and a signaling apparatus that is responsive to the storing apparatus having a new message for a first one of the destinations by sending a first signal to the switching system to cause the switching system to redirect a communication incoming to the first destination to the messaging system after the first time interval―preferably immediately―and is responsive to the storing apparatus not having a new message for the first destination by sending a second signal to the switching system to cause the switching system to redirect the incoming communication to the messaging system only after the second time interval so that the originator of the incoming communication is able to terminate the communication before the communication is answered by the messaging system.

The invention provides a toll-saver-like feature for messaging systems shared by a plurality of users, thereby providing the cost savings effected by the toll-saver feature to users of shared messaging systems. Illustratively relying on existing capabilities of switching systems and messaging systems for its implementation, the invention is easy to implement and to retrofit into existing systems.

While the invention has been characterized in terms of apparatus, it also encompasses a method that effects the recited functionality of the apparatus. The apparatus preferably includes an effector―any entity that effects the corresponding function, unlike a means―for each method step. The invention further encompasses any computer-readable medium containing instructions which, when executed in a computer, cause the computer to perform the method steps.

These and other advantages and features of the present invention will become more evident from the following description of an illustrative embodiment of the invention considered together with the drawing.

### Brief Description of the Drawing

FIG. 1 is a block diagram of an illustrative communications system that includes an illustrative embodiment of the invention;
FIG. 2 is a block diagram of a data structure of a first embodiment of a toll-saver feature program of a VMS of the system of FIG. 1;
FIG. 3-6 are flow diagrams of an activation, new message storage, new message retrieval, and deactivation functions, respectively, of the toll-saver feature program of the VMS of the system of FIG. 1;
FIG. 7 is a flow diagram of send-all-calls feature operation of a PBX of the system of claim 1;
FIG. 8 is a block diagram of a data structure of a second embodiment of a toll-saver feature program of the PBX of the system of claim 1; and
FIG. 9 is a flow diagram of an MWI message response function of the toll-saver feature program of the PBX of the system of FIG. 1.

### Detailed Description

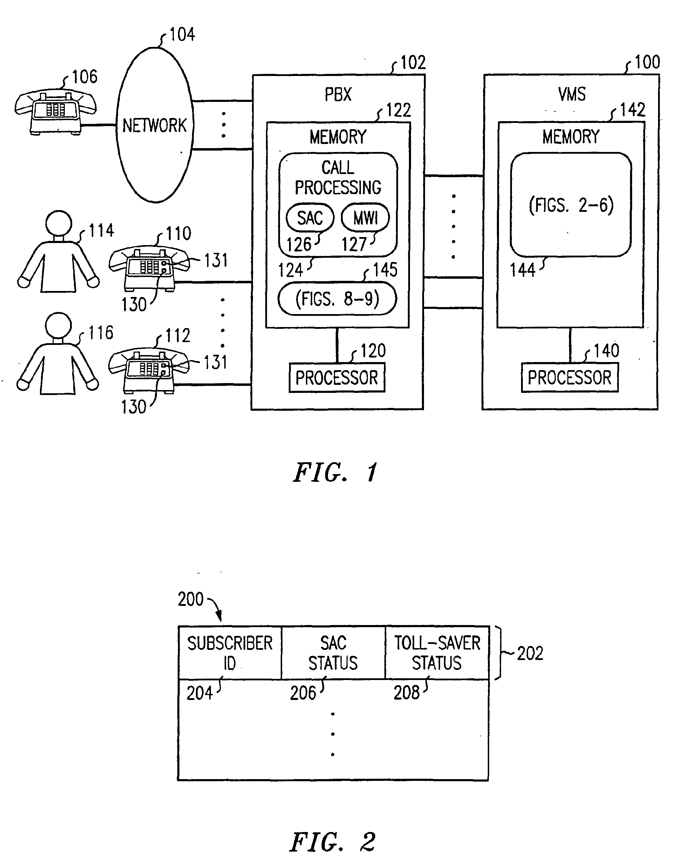

FIG. 1 shows an illustrative telecommunications system comprising a switching system such as a private branch exchange (PBX) 102, and a messaging system such as a voice messaging system (VMS) 100. PBX 102 provides telecommunications services to a plurality of subscribers 114-116 equipped with communication terminals such as telephones 110-112. PBX 102 is connected by communications links to telephones 110-112 and to a communications network such as the public telephone network 104. PBX 102 is also connected by communications links to VMS 100 which provides messaging services to subscribers 114-116 who are its users.

VMS 100 conventionally allows its users―mailbox owners―to retrieve their messages by calling a central telephone number for the system and then logging in to their personal account. Alternatively, a mailbox owner can log into his or her personal account by calling into their mailbox, as if they wanted to leave a message in that mailbox, and then, by using appropriate commands, access the standard log-in menu. For example, after calling into a mailbox, a caller may dial "Star R" at any time after the system has answered the call on behalf of the mailbox owner, causing the system to assume that the caller is a mailbox owner and to prompt the caller to log in.

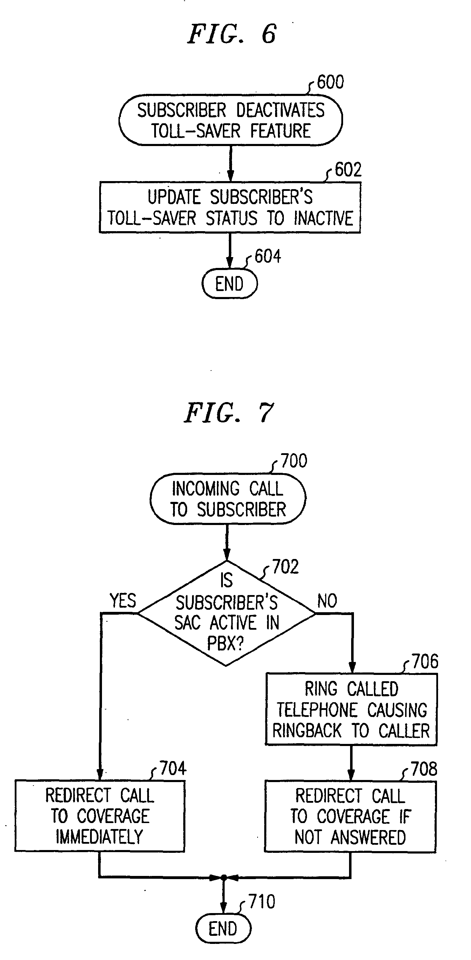

PBX 102 is a stored-program-controlled machine that includes a processor 120 for executing stored control programs, and a memory 122 for storing data and programs for use by processor 120. Included among the stored programs are call processing programs 124 that include a send-all-calls (SAC) feature 126 program. The SAC feature works as shown in FIG. 7. When a subscriber 114-116 either activates a SAC button 130 on his or her telephone 110-112 or dials a SAC activation feature access code on his or her telephone 110-112, PBX 102 thereafter responds to incoming calls by immediately, or after one or two rings, sending any call that is incoming to that telephone 110-112 to that telephone's specified coverage point, such as another telephone 110-112 or VMS 100. When the subscriber 114-116 either deactivates the SAC button 130 or dials a SAC deactivation feature access code, PBX 102 responds by returning to normal operation where it responds to any call incoming to that telephone 110-112 by ringing that telephone and causing ring-back to be given to the caller a predetermined number of times―illustratively four or five―before sending an unanswered said call to the coverage point. Further included among call processing programs 124 is a message-waiting indication (MWI) feature 127 program. MWI feature 127 responds to receipt by PBX 102 of a MWI activation signal for a particular telephone 110-112 by activating an indicator, such as lighting a lamp 131, on that telephone 110-112, and responds to receipt by PBX 102 of a MWI deactivation signal for that telephone 110-112 by deactivating the indicator on that telephone 110-112. PBX 102 is illustratively the Definity® enterprise communications system of Lucent Technologies Inc.

VMS 100 is also a stored-program-controlled machine that includes a processor 140 for executing stored control programs and a memory 142 for storing data and programs for use by processor 140. Included among the stored programs is an MWI feature 143 program that works as follows. When VMS stores a new message in the mailbox of a subscriber 114-116 for whom the feature is activated, VMS 100 sends an MWI activation message for that subscriber to PBX 102; when VMS 100 stores no new messages in the mailbox of a subscriber 114-116, VMS 100 sends an MWI deactivation message for that subscriber to PBX 102. VMS 100 is illustratively either the Definity Audix® or the Intuity® multimedia messaging system of Lucent Technologies Inc.

As described so far, the system of FIG. 1 is conventional. However, according to one embodiment of the invention, VMS 100 includes a toll-saver feature program 144 stored in memory 142. The data and functionality of program 144 are shown in FIGs. 2-6.

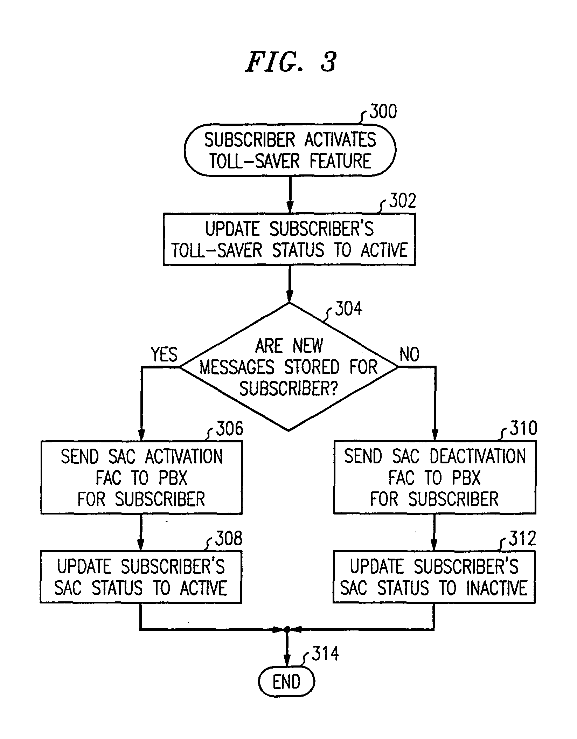

Program 144 includes a data structure 200, shown in FIG. 2, that includes a plurality of entries 202, one for each subscriber 114-116 who is a user of VMS 100. Each entry 202 stores the corresponding subscriber's identifier (ID) 204, SAC feature status 206, and toll-saver feature status 208. To activate the toll-saver feature, at step 300 of FIG. 3, a subscriber 114-116 conventionally accesses his or her mailbox in VMS 100 and selects toll-saver feature activation from a mailbox administration menu. In response, VMS 100 stores an active indication in toll-saver feature status 208 of that subscriber's entry 202 in FIG. 2, at step 302. VMS 100 then activates the subscriber's SAC feature 126 conditionally. That is, VMS 100 checks if that subscriber's mailbox has stored therein any new messages, at step 304. If so, VMS 100 sends a SAC activation feature access code 126 for that subscriber to PBX 102 to activate the subscriber's SAC feature 126 in PBX 102, at step 306, and stores an active indication in SAC feature status 206 of that subscriber's entry 202 in FIG. 2, at step 308, whereupon toll-saver feature activation ends, at step 314. If the subscriber's mailbox is found to not contain any new messages at step 304, VMS 100 sends a SAC deactivation feature access code for that subscriber to PBX 102 to deactivate the subscriber's SAC feature126 in PBX 102, at step 310, and stores an inactive indication in SAC feature status 206 of that subscriber's entry 202, at step 312, whereupon toll-saver feature activation ends, at step 314. PBX 102 responds to the SAC feature access codes in the same manner as if they were sent by the subscriber 114-116 from his or her telephone 110-112, as described previously.

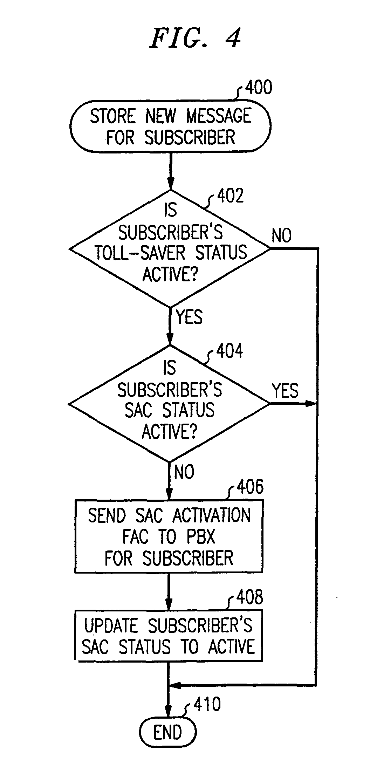

When a new message is stored in a subscriber's mailbox, VMS 100 under control of program 144 responds as shown in FIG. 4. In response to storing of the new message, at step 400, VMS 100 checks the toll-saver feature status 208 of that subscriber's entry 202 in FIG. 2, at step 402, to determine if it is shown as active. If not, VMS 100 ends this operation, at step 410; if so, VMS 100 checks the SAC feature status 206 of that subscriber's entry 202, at step 404, to determine if it is shown as active. If SAC feature status is active, VMS 100 merely ends this operation, at step 410; if SAC feature status is inactive, VMS 100 sends a SAC activation feature access code for this subscriber to PBX 102, at step 406, updates the subscriber's SAC feature status 206 to active, at step 408, and then ends this operation, at step 410.

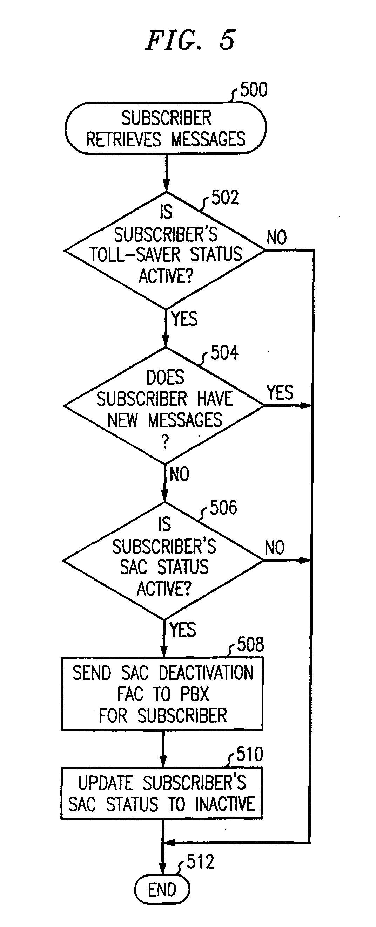

When a subscriber 114-116 retrieves a new message from his or her subscriber's mailbox, VMS 100 under control of program 144 responds as shown in FIG. 5. In response to retrieval of the new message, at step 500, VMS 100 checks the toll-saver feature status 208 of that subscriber's entry 202 in FIG. 2, at step 502, to determine if it is shown as active. If not, VMS 100 ends this operation, at step 520; if so VMS 100 checks the subscriber's mailbox to determine if there are any new messages stored for the subscriber, at step 504. If there are no new messages, VMS 100 merely ends this operation, at step 520; if there are new messages, VMS 100 checks the SAC feature status 206 of that subscriber's entry 202, at step 506, to determine if it is shown as active. If SAC feature status 206 is inactive, VMS 100 merely ends this operation, at step 520; if SAC feature status 206 is active, VMS 100 sends a SAC deactivation feature access code for this subscriber to PBX 102, at step 508, updates the subscriber's feature SAC status 206 to inactive, at step 510, and then ends this operation, at step 520.

To deactivate the toll-saver feature, at step 600 of FIG. 6, a subscriber 114-116 conventionally accesses his or her mailbox in VMS 100 and selects toll-saver feature deactivation from a mailbox administration menu. In response, VMS 100 stores an inactive indication in toll-saver feature status 208 of that subscriber's entry 202, at step 602, and then ends this operation, at step 604.

A subscriber 114-116 who is away from his or her own phone 110-112 makes use of the active toll-saver feature as shown in FIG. 7. To find out whether he or she has any new messages, the subscriber 114-116 does not call the central number for VMS 100. Rather, the subscriber 114-116 dials the telephone number of his or her own phone 110-112 from a remote telephone 106. In response to being notified of the call, at step 700, PBX 102 checks whether SAC feature 126 is activated for the called phone 110-112, at step 702. If SAC feature 126 is activated, it means that VMS 100 has new messages for the calling subscriber, and PBX 102 sends the call to a designated coverage point either immediately or after ringing the called phone 110-112 once, at step 704. The designated coverage point is VMS 100, and it answers the call, whereupon the subscriber can log into his or her mailbox and retrieve new messages in the conventional manner. If SAC feature 126 is not activated, it means that VMS 100 does not have new messages for the calling subscriber, and PBX rings the called telephone 110-112 multiple times, causing ring-back to be given to the caller, at step 706, before sending the unanswered call to the designated coverage point, at step 710. This indicates to the subscriber that there are no new messages for him or her and gives him or her a chance to hang up the call before it is answered at the coverage point. In either case, operation of SAC feature 126 ends, at step 710.

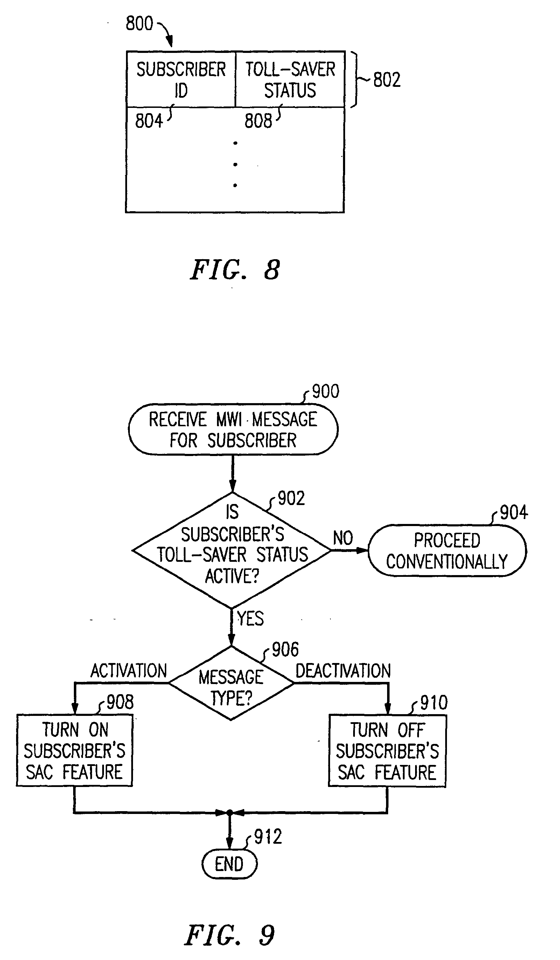

According to another embodiment of the invention, PBX 102 includes a toll-saver feature program 145 stored in memory 122. The data and functionality of program 145 are shown in FIGs. 8-9.

Program 145 includes a data structure 800, shown in FIG. 8, that includes a plurality of entries 802, one for each subscriber 114-116. Each entry 802 stores the corresponding subscriber's identifier (ID) 804 and toll-saver feature status 808. To activate or deactivate the toll-saver feature, a subscriber 114-116 either sends a toll-saver activation or deactivation feature access code (FAC) to PBX 102 from his or her telephone 110-112 or sends the toll-saver activation or deactivation FAC along with his or her ID to PBX 102 from any telephone 106 or 110-112. PBX 102 responds by storing an active or inactive indication, respectively, in toll-saver status 808 of that subscriber's entry 802.

When a new message is stored in a subscriber's mailbox, VMS 100 under control of MWI program 143 sends an MWI activation message to PBX 102. Similarly, when no new messages are stored in a subscriber's mailbox, VMS 100 under control of MWI program 143 sends an MWI deactivation message to PBX 102. PBX 102 under control of program 145 responds as shown in FIG. 9.

Upon receipt of a MWI message for a subscriber 114-116, at step 900 of FIG. 9, PBX 102 checks that subscriber's entry 802 in FIG. 8 to determine the subscriber's toll-saver feature status 808, at step 902. If that status is inactive, PBX 102 proceeds conventionally, at step 904. If toll-saver feature status 808 is active, PBX 102 checks the message type of the received MWI message, at step 906. If it is an MWI activation message, PBX 102 turns on the subscriber's SAC feature 126, at step 908; if it is an MWI deactivation message, PBX 102 turns off the subscriber's SAC feature 126, at step 910. PBX 102 then ends processing of the received MWI message, at step 912. The rest of the operation of PBX 102 is as illustrated in FIG. 7 and described in conjunction therewith.

Of course, various changes and modifications to the illustrative embodiment described above will be apparent to those skilled in the art. Such changes and modifications can be made without departing from the spirit and the scope of the invention and without diminishing its attendant advantages. It is therefore intended that such changes and modification be covered by the following claims except insofar as limited by the prior art.

## Claims

1. A communications system comprising:
a communications switch for directing communications to individual ones of a plurality of destinations;
a messaging system coupled to the switch for storing messages, including new messages, for individual ones of the destinations;
signaling apparatus in the messaging system responsive to the messaging system having a new message for a first one of the destinations, for sending a first signal to the switch, and responsive to the messaging system not having a new message for the first one of the destinations, for sending a second signal to the switch;
redirecting apparatus in the telephone switch responsive to the first signal and to a communication incoming to the first destination, for redirecting the incoming communication to the messaging system after a first time interval, and responsive to the incoming communication and to the second signal, for redirecting the incoming communication to the messaging system only after a second time interval longer enough than the first interval to enable an originator of the incoming communication to terminate the communication before the communication is answered by the messaging system.

2. The apparatus of claim 1 wherein:
the redirecting apparatus responds to the first signal and the incoming communication by redirecting the incoming communication to the messaging system substantially immediately.

3. The apparatus of claim 1 wherein:
the communications switch comprises a telephony switching system;
the incoming communication comprises a telephone call; and
the destinations comprise telecommunications terminals of users of the messaging system.

4. The apparatus of claim 3 wherein:
the redirecting apparatus causes a waiting-for-answer signal to be provided to the originator of the call during the second time interval.

5. The apparatus of claim 4 wherein:
the redirecting apparatus comprises
a send-all-calls arrangement of the switching system, and
the first signal activates and the second signal deactivates the send-all-calls arrangement.

6. The apparatus of claim 5 wherein:
the messaging system is responsive to an input from the user of the first destination activating a toll-saver feature by activating the signaling apparatus, and is further responsive to an input from the user of the first destination deactivating the toll-saver feature, by deactivating the signaling apparatus.

7. The apparatus of claim 5 wherein:
the signaling apparatus comprises
a message-waiting indication (MWI) arrangement of the messaging system; and
the first signal is an MWI activation signal and the second signal is an MWI deactivation signal.

8. The apparatus of claim 7 wherein:
the switching system is responsive to an input from the user of the first destination activating a toll-saver feature by activating the redirecting apparatus, and is further responsive to an input from the user of the first destination deactivating the toll-saver feature by deactivating the redirecting apparatus.

9. A messaging system for use with a communications switching system adapted to redirect communications incoming to individual ones of a plurality of destinations to the messaging system after either one of a first time interval and a second time interval longer than the first time interval, comprising:
storage apparatus for storing messages, including new messages, for individual ones of the destinations; and
signaling apparatus responsive to the storing apparatus having a new message for a first one of the destinations, for sending a first signal to the switching system to cause the switching system to redirect a communication incoming to the first destination to the messaging system after the first time interval, and responsive to the storing apparatus not having a new message for the first one of the destinations, for sending a second signal to the switching system to cause the switching system to redirect the incoming communication to the messaging system only after the second time interval so that the originator of the incoming communication is able to terminate the communication before the communication is answered by the messaging system.

10. The messaging system of claim 9 wherein:
the first signal is a send-all-calls feature activation signal and the second signal is a send-all-calls feature deactivation signal.

11. The messaging system of claim 9 wherein:
the first signal is a message-waiting indication activation signal and the second signal is a message-waiting indication deactivation signal.

12. A communications switch for use with a messaging system adapted to send a first signal for a destination upon storing a new message for the destination and to send a second signal for the destination upon ceasing to store any new messages for the destination, comprising:
means for receiving the first and the second signals from the messaging system; and
redirecting apparatus responsive to a communication incoming to a first destination and receipt by the receiving means of the first signal for the first destination, for redirecting the incoming communication to the messaging system after a first time interval, and responsive to the incoming communication and receipt by the receiving means of the second signal for the first destination, for redirecting the incoming communication to the messaging system only after a second interval longer enough than the first interval to enable an originator of the incoming communication to terminate the communication before the communication is answered by the messaging system.

13. The communications switch of claim 12 wherein:
the redirecting apparatus comprises a send-all-calls arrangement, responds to the first signal by activating the send-all-calls arrangement, and responds to the second signal by deactivating the send-all-calls arrangement.

14. The communications switch of claim 12 wherein:
the first signal is a message-waiting indication activation signal and the second signal is a message-waiting indication deactivation signal.

15. A communications method comprising:
in response to a messaging system storing a new message for a first one of a plurality of destinations, the messaging system sending a first signal to a switch;
in response to receiving the first signal and a communication incoming to the first destination, the switch redirecting the incoming communication to the messaging system after a first time interval;
in response to the messaging system ceasing to store any new messages for the first one of the plurality of destinations, the messaging system sending a second signal to the switch; and
in response to receiving the second signal and the incoming communication, the switch redirecting the incoming communication to the messaging system only after a second time interval longer enough than the first interval to enable an originator of the incoming communication to terminate the communication before the communication is answered by the messaging system.

16. The method of claim 15 wherein:
redirecting the incoming communication after a first time interval comprises
redirecting the incoming communication to the messaging system substantially immediately.

17. The method of claim 15 further comprising:
in response to receiving the second signal and the incoming communication, the switch causing a waiting-for-answer signal to be provided to the originator of the incoming communication during the second time interval.

18. The method of claim 15 wherein:
redirecting the incoming communication after a first time interval comprises
in response to receiving the first signal, the switch activating a send-all-calls feature for the first destination;
in response to receiving the incoming communication, the switch using the activated send-all-calls feature to redirect the communication after the first time interval; and
redirecting the incoming communication after a second time interval comprises
in response to receiving the second signal, the switch deactivating the send-all-calls feature for the first destination, and
in response to receiving the incoming communication and the send-all-calls feature being deactivated, the switch redirecting the communication after the second time interval.

19. The method of claim 18 further comprising:
in response to an input from the user of the first destination for activating a toll-saver feature, the messaging system enabling the generating of the first and second signals; and
in response to an input from the user of the first destination for deactivating a toll-saver feature, the messaging system disabling the generating of the first and second signals.

20. The method of claim 18 wherein:
sending the first signal comprises
the messaging system sending a message-waiting indication activation signal; and
sending the second signal comprises
the messaging system sending a message-waiting indication deactivation signal.

21. The method of claim 20 further comprising:
in response to an input from the user of the first destination for activating a toll-saver feature, the switch enabling the activating and deactivating of the send-all-calls feature responsive to the message-waiting indication signals; and
in response to an input from the user of the first destination for deactivating the toll-saver feature, the switch disabling the activating and deactivating of the send-all-calls feature responsive to the message-waiting indication signals.

22. A communications method comprising:
storing a new message for a first of a plurality of destinations in a messaging system for storing messages for individual ones of the plurality of destinations;
in response, the messaging system sending a first signal to a switching system to cause the switching system to redirect a communication incoming to the first destination to the messaging system after a first time interval;
ceasing to store any new messages for the first destination in the messaging system; and
in response, the messaging system sending a second signal to the switching system to cause the switching system to redirect the incoming communication to the messaging system only after a second time interval longer than the first time interval so that an originator of the incoming communication is able to terminate the communication before the communication is answered by the messaging system.

23. The method of claim 22 wherein:
sending a first signal comprises
the messaging system sending a send-all-calls feature activation signal to the switch; and
sending a second signal comprises
the messaging system sending a send-all-calls feature deactivation signal to the switch.

24. The method of claim 22 wherein:
sending a first signal comprises
the messaging system sending a message-waiting indication activation signal to the switch; and
sending a second signal comprises
the messaging system sending a message-waiting indication deactivation signal to the switch.

25. A communications method comprising:
receiving at a communications switch a first signal from a messaging system indicating that the messaging system is storing a new message for a first one of a plurality of destinations;
in response to receiving the first signal, upon receiving a communication incoming to the first destination, the communication switch redirecting the incoming communication to the messaging system after a first time interval;
receiving at the communications switch a second signal from the messaging system indicating that the messaging system ceased storing any new messages for the first destination; and
in response to receiving the second signal, upon receiving the incoming communication, the communication switch redirecting the incoming communication to the messaging system only after a second time interval longer enough than the first time interval to enable an originator of the incoming communication to terminate the communication before the communication is answered by the messaging system.

26. The method of claim 25 further comprises:
in response to receiving the first signal, the communications switch activating a send-all-calls feature for the first destination, and
in response to receiving the second signal, the communications switch deactivating the send-all-calls feature for the first destination; and wherein
redirecting after a first time interval comprises
the communications switch using the active send-all-calls feature to redirect the incoming communication to the messaging system after the first time interval.

27. The method of claim 25 wherein:
receiving a first signal comprises
receiving from the messaging systems a message-waiting indication activation signal for the first destination; and
receiving a second signal comprises
receiving from the messaging systems a message-waiting indication deactivation signal for the first destination.

28. An apparatus for performing the method of one of the claims 15-27.

29. A computer-readable medium containing instructions which, when executed in a computer, cause the computer to perform the method of one of the claims 15-27.
